# EUROPEAN PATENT APPLICATION

(11) **EP 0 728 552 A1**
(43) Date of publication of application: **28.08.1996**
(21) Application number: 96102640.8
(22) Date of filing: 22.02.1996
(51) Int. Cl.: B23D 61/18

(54) **Diamond cable for cutting stone**

(30) Priority: 23.02.1995 IT TO950040 U
(71) Applicant: HS VEGLIO S.r.l., I-10044 Pianezza (Torino) (IT)
(72) Inventor: Oreste, Veglio, 10044 Pianezza (TO) (IT)
(74) Representative: Lotti, Giorgio

(57) **Abstract**

A diamond cable for cutting stone, of the type consisting of a supporting cable (11) on which there are inserted annular elements (12) each having a diamond portion (15) of enlarged diameter. Proximate to the diamond portion (15) each annular element (12) provides concave seats in form of circumferential grooves (17) for transporting to and removing from the working surface a cooling liquid.

## Description

The present invention refers to a diamond cable for cutting stone.

At present there are known diamond cables consisting of a flexible supporting cable on which super-abrasive elements are inserted. Such elements are usually of substantially annular shape and have a larger diamond section. These elements are alternately arranged with distance tubes slipped on the cable.

As the cable slides along the stone surface being worked, the diamond elements cut the stone. In use, diamond cables develop very high friction and an enormous amount of heat, whereby they undergo quick wear.

Cooling of the cable is a problem which has not been solved yet. Another existing problem concerns removing stone fragments (spall) from the working area as quickly as possible so that the cutting tool can act on that part of the stone which is still integer without wasting energy by rubbing on spall that has already been separated from the stone.

An object of the present invention is to provide a long lasting diamond cable of improved efficiency, thereby allowing better cooling of the working area and cause less wear of abrasive tools.

A further object of the invention is to provide a diamond cable capable of taking away from the working area the spall removed by the diamond elements.

These and further objects which will be more apparent hereinafter are attained according to the present invention by the provision of a diamond cable for cutting stone, of the type consisting of a supporting cable on which there are inserted annular elements each having a diamond portion of enlarged diameter, characterised in that proximate to said diamond portion each annular element provides concave seats for transporting to and removing from the working surface a cooling liquid.

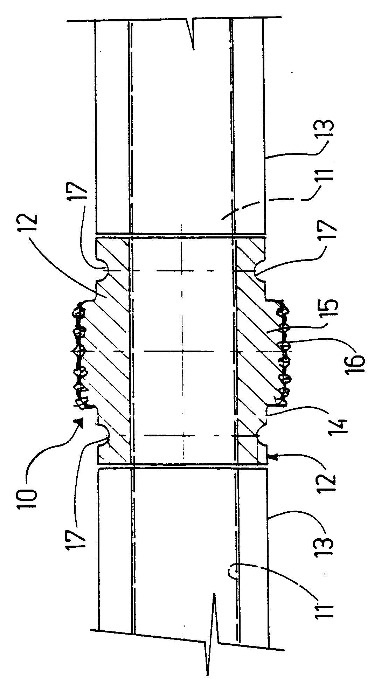

For a better understanding of the present invention, reference is made to the following detailed description a preferred embodiment considered in combination with the accompanying drawing, which is a longitudinal axial section view of part of a diamond cable.

Referring to the drawing, numeral 10 designates overall a stone cutting diamond cable consisting of a flexible supporting cable 11 on which there are slipped diamond elements 12 alternately arranged with distance tubes 13. The distance tubes are generally in form of springs or hollow cylinders. These members are known and will not be described in further detail herein. Distance members 13 serve to keep the diamond elements 12 equally spaced apart. Preferably, diamond elements 12 consist of a supporting steel cable portion 14 of substantially annular shape having a median portion 15 of larger diameter with respect to that of distance tubes 13. The outer surface 16 of said median larger portion constitutes the active part of the diamond cable with abrasive properties providing cutting action during operation.

In accordance with the present invention, two circumferential grooves 17 are provided in the diamond element 12 at either side of the diamond enlarged portion 15. Grooves 17 are designed to act as concave seats or receptacles for retaining and transporting cooling liquid along the cutting path on the stone. Particularly, the groove which during motion precedes the diamond enlarged portion provides mainly for transporting cooling liquid to the working surface, while the groove following the diamond portion is mainly active in removing stone fragments mixed to the cooling liquid from the working area.

As can be appreciated, the diamond cable of the present invention provides improved distribution and circulation of liquid, thereby improving cooling of the cutting tools and extending lifetime thereof. Further, efficiency of the diamond cable is improved as the grooves continuously remove spall from the working area and allow the diamond elements to act directly on integer parts of the stone instead of fragments.

It is to be understood that the embodiment described above is merely exemplary and that persons skilled in the art may make many modifications without departing from the spirit and scope of the invention. All such modifications and variations, as for example to the number, shape and arrangement of the grooves 17 are intended to be included within the scope of the invention as defined by the appended claims.

## Claims

1. A diamond cable for cutting stone, of the type consisting of a supporting cable (11) on which there are inserted annular elements (12) each having a diamond portion (15) of enlarged diameter, characterised in that proximate to said diamond portion (15) each annular element (12) provides concave seats (17) for transporting to and removing from the working surface a cooling liquid.

2. A diamond cable as claimed in claim 1, characterised in that said concave seats (17) are two for each annular element (12), and that the diamond portion (15) is interposed therebetween in the direction of the length of the cable.

3. A diamond cable as claimed in claim 1, characterised in that the concave seats (17) consist of circumferential grooves.
